# EUROPÄISCHE PATENTANMELDUNG

(11) **EP 2 256 432 A2**
(43) Veröffentlichungstag der Anmeldung: **01.12.2010**
(21) Anmeldenummer: 10005196.0
(22) Anmeldetag: 18.05.2010
(51) Int. Cl.: F24J 2/52, H01L 31/042, H01L 31/05

(54) **Ständer für rechteckige Solarmodule**

(30) Priorität: 20.05.2009 DE 202009007517 U
(71) Anmelder: TriEnergy GmbH, 71287 Weissach (DE)
(72) Erfinder: Hertter, Bernd, 75389 Neuweiler (DE); Michler, Tobias, 71397 Leutenbach (DE); Krämer, Thomas, 71287 Weissach (DE)
(74) Vertreter: Twelmeier Mommer & Partner

(57) **Zusammenfassung**

Die Erfindung geht aus von einem Ständer für rechteckige Solarmodule, um diese auf einem Flachdach geneigt zu montieren, mit einem waagerechten Träger (1), mit einem von dem waagerechten Träger (1) aufragenden Pfosten (2) und mit einer den Pfosten (2) und den Träger (1) verbindenden, geneigten Traverse (3). Erfindungsgemäß ist vorgesehen, dass der Ständer eine Halterung (8) mit zwei zusammenhängenden, um eine waagerechte Achse gegeneinander verschwenkbaren Winkelstücken (9, 10) aufweist, welche die geneigte Traverse (3) mit dem waagerechten Träger (1) und/oder mit dem Pfosten (2) verbinden, von denen ein erstes Winkelstück (9) U-förmig ausgebildet ist, und zwar mit einer Basis (11) und zwei im rechten Winkel von der Basis (11) abstehenden Seitenteilen (12), wobei die Basis (11) Mittel (15) zum Befestigen des ersten Winkelstücks (9) an dem waagerechten Träger (1) bzw. an dem Pfosten (2) hat und die Seitenteile (12) je eine Bohrung (13) sowie einen Schlitz (14) haben, welcher vom Rand des Seitenteils (12) ausgeht und in die Bohrung (13) mündet, wobei die beiden Bohrungen (13) miteinander fluchten und auch die beiden Schlitze (14) miteinander fluchten, und von denen das zweite Winkelstück (10) zwei sich in entgegengesetzte Richtungen erstreckende, miteinander fluchtende Arme (20) hat, welche in den Bohrungen (13) der Seitenteile (12) stecken, wobei das zweite Winkelstück (9) Mittel (16) zum Verbinden des zweiten Winkelstücks (10) mit der geneigten Traverse (2) des Ständers aufweist. Der Ständer kann auch an Fassaden montiert werden.

## Beschreibung

Die Erfindung betrifft einen Ständer mit einer Halterung für gerahmte, rechteckige Solarmodule, um diese geneigt auf einem Flachdach oder an einer Fassade zu montieren. Die Solarmodule, mit denen Sonnenlicht in Strom gewandelt wird, sollten auch auf einem Flachdach oder an einer Fassade geneigt montiert werden, um einen günstigen Winkel zum eingestrahlten Sonnenlicht zu erzielen. Es ist bekannt, zu diesem Zweck auf einem Flachdach Ständer zu errichten, die eine solche geneigte Montage der Solarmodule erlauben. Die bekannten Ständer haben waagerechte Schienen zur Befestigung auf dem Flachdach, senkrechte Pfosten, die auf den waagerechten Schienen stehen, und im Abstand zu den senkrechten Pfosten pultartig ausgebildete Konsolen, welche mit der gewünschten Neigung individuell gefertigt und auf den waagerechten Schienen befestigt werden. Zwischen den Konsolen und den oberen Enden der Pfosten werden Profilstäbe montiert, die wie die Sparren eines Satteldaches geneigt verlaufen, und diese geneigt verlaufenden Profilstäbe werden durch waagerechte Quertraversen verbunden, in welche die Solarmodule so eingelegt werden, dass sie zwischen einer unteren und einer oberen Quertraverse von diesen gehalten sind. Die geneigt verlaufenden Profilstäbe werden nachfolgend auch als geneigte Traversen bezeichnet. Sie werden im Stand der Technik mit den pultartigen Konsolen verbunden, welche die Neigung der geneigten Traversen bestimmen. Für unterschiedliche Neigungen werden unterschiedliche Konsolen benötigt.

Der vorliegenden Erfindung liegt der Aufgabe zugrunde, eine einfachere und kostengünstigere Möglichkeit für die geneigte Montage von Solarmodulen auf Flachdächern und Fassaden zu finden.

Diese Aufgabe wird für die Verwendung an einem Flachdach durch einen Ständer mit den im Anspruch 1 angegebenen Merkmalen und für die Verwendung an einer Fassade mit den im Anspruch 2 angegebenen Merkmalen gelöst. Vorteilhafte Weiterbildungen der Erfindung sind Gegenstand der Unteransprüche.

Erfindungsgemäß wird anstelle von herkömmlichen pultartigen Konsolen mit unver-änderlicher Neigung für das Halten geneigter Traversen auf einem Flachdach nunmehr eine Halterung verwendet, die zwei zusammenhängende, um eine waagerechte Achse gegeneinander verschwenkbare Winkelstücke aufweist, von denen ein erstes Winkelstück U-förmig ausgebildet ist, und zwar mit einer Basis und mit im rechten Winkel von der Basis abstehenden Seitenteilen, wobei die Basis Mittel zum Befestigen des ersten Winkelstücks an einem waagerechten Träger hat und die Seitenteile je eine Bohrung sowie einen Schlitz haben, welcher vom Rand des Seitenteils ausgeht und in die Bohrung mündet, wobei die beiden Bohrungen miteinander fluchten und auch die beiden Schlitze miteinander fluchten. Das zweite Winkelstück hat zwei sich in entgegengesetzter Richtung erstreckende, miteinander fluchtende Arme, welche in den Bohrungen der Seitenteile des ersten Winkelstücks stecken, und weist Mittel zum Verbinden des zweiten Winkelstücks mit einer geneigten Traverse auf, welcher ihrerseits mit waagerechten Quertraversen für das Einlegen und Halten eines Solarmoduls verbunden werden kann. Der erfindungsgemäße Ständer mit der verschwenkbaren Halterung hat wesentliche Vorteile:
- Die schwenkbare Halterung des Ständers kann für beliebige Neigungswinkel eingesetzt werden.
- Die schwenkbare Halterung kann preiswert als Stanz-Biege-Teil hergestellt werden.
- Die schwenkbare Halterung erlaubt eine sehr einfache Justierung der geneigten Traverse des Ständers unter dem gewünschten Neigungswinkel.
- Der Ständer kann mit der erfindungsgemäßen Halterung auf dem Dach leicht zusammengebaut werden.
- Die erfindungsgemäße Halterung kann an beiden Enden einer geneigten Traverse eines Ständers verwendet werden. Es genügt jedoch bereits, sie an nur einem Ende der Traverse vorzusehen, die unter einem vorgegebenen Neigungswinkel montiert werden soll. Das andere Ende der geneigten Traverse kann mittels einer Halterung mit fest vorgegebener Neigung befestigt werden, insbesondere am oberen Ende des Pfostens des Ständers. Die Halterung mit fest vorgegebener Neigung kann mit der fest vorgegebenen Neigung ab Werk individuell gefertigt, fest eingestellt und am Pfosten vormontiert sein.

Die an der Basis des U-förmigen ersten Winkelstücks vorgesehenen Mittel zum Befestigen an einem waagerechten Träger sind vorzugsweise durch ein Loch mit unrundem Querschnitt gebildet. Das erlaubt es, die Befestigung mittels einer Schraube vorzunehmen, die zwischen ihrem Kopf und ihrem Gewindeabschnitt einen Schaftabschnitt mit unrundem Querschnitt hat, insbesondere mit quadratischem oder sechseckigem Querschnitt, welcher in dem entsprechend unrunden Querschnitt des Lochs im ersten Winkelstück durch gegenseitigen formschlüssigen Eingriff ein Mitdrehen der Schraube verhindert, wenn eine Mutter auf die Schraube gedreht wird. Der Kopf der Schraube kann, was vorteilhaft ist, versenkt in dem waagerechten Träger untergebracht sein.

Vorzugsweise verlaufen die Seitenteile des ersten Winkelstücks parallel zueinander. Das ist nicht zwingend, führt jedoch zu einer besonders stabilen Halterung. Die zueinander parallelen Seitenteile des ersten Winkelstücks eignen sich besonders, um das zweite Winkelstück bei seiner Schwenkbewegung zu führen und Querkräfte, d. h. Kräfte in Richtung der Schwenkachse, aufzunehmen.

An der Basis des ersten Winkelstücks ist vorzugsweise eine Zunge vorgesehen, welche auf der den Seitenteilen abgewandten Seite der Basis von dieser absteht, vorzugsweise unter einem von 90° verschiedenen Winkel. Eine solche Zunge ist ein geeignetes Mittel, um das erste Winkelstück relativ zu dem waagerechten Träger zu zentrieren und ausrichten, an welchem das erste Winkelstück befestigt werden soll.

Die Schlitze in den Seitenteilen führen vorzugsweise mit Gefälle von der jeweiligen Bohrung im Seitenteil zum Rand des Seitenteils. Das ist günstig, um ein unbeabsichtigtes Herausgleiten der Arme des zweiten Winkelstücks aus den Bohrungen des ersten Winkelstücks zu verhindern. Die Arme des zweiten Winkelstücks werden zweckmäßigerweise durch die Schlitze in die Bohrungen der Seitenteile eingeführt und sind darin mit etwas Spiel geführt. Das ist günstiger, als die Schlitze wegzulassen und die Arme dadurch in die Bohrungen einzuführen, dass die Seitenteile mit den Bohrungen so gegen das zweite Winkelstück gebogen werden, dass die Bohrungen auf die Arme gleiten. Außerdem ermöglicht es, die beiden Winkelstücke zunächst getrennt voneinander an den Bauteilen zu befestigen, die sie miteinander verbinden sollen, und erst danach das zweite Winkelstück mit seinen Armen in die Bohrungen des anderen Winkelstücks einzuführen.

In einer vorteilhaften Ausführungsform hat das zweite Winkelstück einen ersten Schenkel und einen zweiten Schenkel, welche miteinander einen Winkel einschließen, welcher vorzugsweise ein rechter Winkel ist. Die Arme gehen vom ersten Schenkel aus und die Mittel zum Verbinden mit einer geneigt verlaufenden Traverse sind am zweiten Schenkel vorgesehen. Das ermöglicht einen besonders einfachen Aufbau der Halterung, insbesondere dann, wenn der erste Schenkel und der zweite Schenkel des zweiten Winkelstücks im Wesentlichen ebenflächig gebildet sind, was bevorzugt ist.

Am zweiten Schenkel des zweiten Winkelstücks ist vorzugsweise eine Zunge vorgesehen, welche auf der vom ersten Winkelstück abgewandten Seite des zweiten Schenkels des zweiten Winkelstücks von diesem absteht, vorzugsweise unter einem von 90° verschiedenen Winkel. Diese Zunge ist ein probates Mittel, um das zweite Winkelstück und die geneigte Traverse, die daran befestigt werden soll, aufeinander zu zentrieren und auszurichten, weil die Zunge in einen längs verlaufenden Schlitz bzw. in eine Längsnut der geneigten Traverse eingreifen kann.

Die Ränder des ersten Schenkels des zweiten Winkelstücks laufen in der Nachbarschaft der Arme, die von ihnen ausgehen, vorzugsweise zueinander parallel und haben einen Abstand voneinander, welcher mit dem Abstand der Innenseiten der Seitenteile des ersten Winkelstücks übereinstimmt. Das führt zu einem stabilen Aufbau der zweiteiligen Halterung, der es besonders gut erlaubt, Querkräfte in Richtung der Schwenkachse aufzunehmen.

In einer anderen vorteilhaften Ausführungsform ist das zweite Winkelstück U-förmig ausgebildet, mit einem im Wesentlichen ebenen Mittelteil, an welchem die Mittel zum Verbinden mit einer geneigten Traverse vorgesehen sind, und mit zwei Seitenteilen, von welchen die Arme ausgehen. Gegenüber dem zuvor erläuterten Ausführungsbeispiel zeichnet sich dieses weitere Ausführungsbeispiel durch eine erhöhte mechanische Stabilität und Steifigkeit aus.

Zweckmäßigerweise nehmen die Seitenteile des zweiten Winkelstücks die Seitenteile des ersten Winkelstücks ohne Spiel oder mit wenig Spiel zwischen sich auf, was zu einer guten Führung beim Verschwenken der beiden Winkelstücke gegeneinander führt und das Aufnehmen von Querkräften in Richtung der Schwenkachse erleichtert.

Zu diesem weiteren Ausführungsbeispiel einer zweiteiligen schwenkbaren Halterung ist am Mittelteil des zweiten Winkelstücks zweckmäßigerweise eine Zunge vorgesehen, welche auf der ihren Seitenteilen abgewandten Seite des Mittelteils von diesem absteht, vorzugsweise unter einem von 90° verschiedenen Winkel. Auch in diesem Fall ist die Zunge ein probates Mittel, um das zweite Winkelstück auf die geneigte Traverse, mit welcher sie verbunden werden soll und welche sie halten soll, zu zentrieren und auszurichten.

Auch in dem Fall sind die Mittel des zweiten Winkelstücks zum Befestigen an einer geneigten Traverse für ein Solarmodul durch ein Loch gebildet, insbesondere durch ein Loch mit nicht rundem Querschnitt. Auch hier kann durch Verwendung einer Schraube mit einem entsprechend unrunden Schaftabschnitt eine Verdrehsicherung verwirklicht werden. Sowohl die Halterungen mit U-förmigem Winkelstück als auch die mit L-förmigem Winkelstück lassen sich preiswert als Stanz-Biege-Teile aus Stahl herstellen.

Der für die Verwendung auf einem Flachdach vorgesehene Ständer kann auch an einer Fassade montiert werden. Zu diesem Zweck wird der Träger, welcher waagerecht auf dem Flachdach montiert wird, an der Fassade senkrecht montiert, so dass der Pfosten waagerecht verläuft. Um deutlich zu machen, dass der Ständer nur um 90° gedreht werden muss, um ihn an der Fassade montieren zu können, wurden die im Anspruch 1 gewählten Begriffe "Ständer" und "Pfosten" im nebengeordneten Anspruch 2 beibehalten.

Ausführungsbeispiele der Erfindung sind in den beigefügten Zeichnungen dargestellt. Gleiche oder einander entsprechende Teile sind in den Beispielen mit übereinstimmenden Bezugszahlen bezeichnet.
- Figur 1: zeigt einen Ständer, um gerahmte Solarmodule auf einem Flachdach oder an einer Fassade geneigt zu montieren, in einer Schrägansicht,
- Figur 2: zeigt in einer Schrägansicht eine Halterung aus zwei verschwenkbar mitein- ander verbundenen Winkelstücken für das Festlegen einer geneigten Traver- se in dem in Figur 1 dargestellten Ständer,
- Figur 3: zeigt in einer Schrägansicht, in Explosionsdarstellung, wie an der geneigten Traverse des Ständers aus Figur 1 eine waagerecht verlaufende Quertraver- se montiert wird,
- Figur 4: zeigt in einer Schrägansicht die längsgeschnittene geneigte Traverse des Ständers aus Figur 1, an welchem ein quer geschnitten dargestellter Halter festgeschraubt ist, in welchen die Quertraverse eingeklippst ist,
- Figur 5: zeigt den Halter aus Figur 4 vergrößert in einer Schrägansicht,
- Figur 6: zeigt den Halter aus Figur 5 in einer Schrägansicht, ergänzt um einen Ge- genhalter, mit welchem er verschraubt ist,
- Figur 7: zeigt ein anderes Ausführungsbeispiel einer Halterung, welche aus zwei verschwenkbar miteinander verbundenen Winkelstücken gebildet ist, in einer Schrägansicht,
- Figur 8: zeigt das erste Winkelstück (Unterteil) der Halterung aus Figur 7 in einer Sei- tenansicht,
- Figur 9: zeigt das Unterteil aus Figur 7 in einer Ansicht parallel zu den Seitenteilen und zur Basis des Unterteils,
- Figur 10: zeigt das Unterteil aus Figur 7 in einer Draufsicht,
- Figur 11: zeigt eine Abwicklung des Unterteils,
- Figur 12: zeigt das zweite Winkelstück (Oberteil) der Halterung aus Figur 7 in ei- ner Ansicht auf ein Seitenteil,
- Figur 13: zeigt das Oberteil aus Figur 7 in einer Ansicht parallel zu dessen Sei- tenteilen und dem Mittelteil,
- Figur 14: zeigt das Oberteil aus Figur 7 in einer Draufsicht, und
- Figur 15: zeigt eine Abwicklung des Oberteils aus Figur 7.

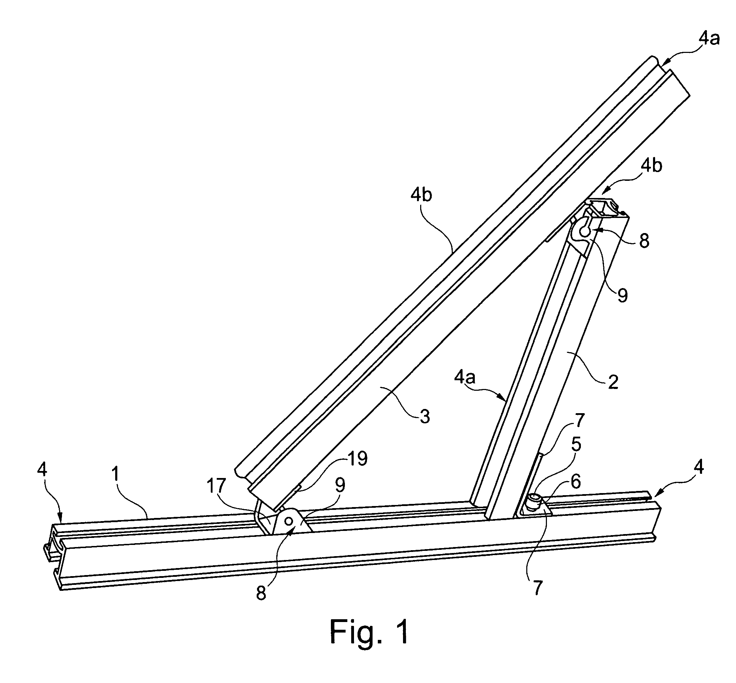

Der in Figur 1 dargestellte Ständer hat als waagerechten Träger eine Grundschiene 1, einen senkrecht auf der Grundschiene 1 stehenden Pfosten 2, der als Profilstab ausgebildet und mit der Grundschiene 1 verschraubt ist, sowie eine geneigte Traverse 3, welche sowohl mit der Grundschiene 1 als auch mit dem Pfosten 2 verbunden ist. Die Grundschiene 1, der Pfosten 2 und die geneigte Traverse 3 bestehen aus Metall, insbesondere aus Aluminium, und können durch Strangpressen hergestellt sein. Der Pfosten 2 und die geneigte Traverse 3 können dasselbe Querschnittsprofil aufweisen und so ist es im dargestellten Beispiel. Mit seiner Grundschiene 1 wird der Ständer auf einem Flachdach befestigt. Sowohl die Grundschiene 1 als auch der Pfosten 2 und die geneigte Traverse 3 haben eine hinterschnitten ausgebildete Nut 4, in welche der Kopf einer Schraube 5 unverlierbar eingeführt werden kann, deren Schaft aus der Nut 4 nach außen ragt. Vorzugsweise hat der Schaft der Schraube 5 unmittelbar angrenzend an ihren Kopf einen Abschnitt ohne Gewinde mit einem unrunden Querschnitt, insbesondere mit einem quadratischen oder sechseckigen Querschnitt, so dass sich die Schraube 5 in der hinterschnittenen Nut 4 nicht drehen kann, wenn auf das Gewinde der Schraube 5 eine Mutter 6 insbesondere eine Gleitmutter, gedreht wird. Solche Schrauben werden auch als Flachrundschrauben bezeichnet. Die Grundschiene 1 und der senkrecht darauf stehende Pfosten 2 sind mit Hilfe eines rechtwinkligen Montagewinkels 7 miteinander verschraubt, indem eine erste Schraube 5 mit ihrem Kopf in die hinterschnittene Nut 4 der Grundschiene 1 eingeführt, durch eine Bohrung des Montagewinkels 7 gesteckt und dann auf die beschriebene Weise mit einer Mutter 6 mit der Grundschiene 1 verschraubt wird. In entsprechender Weise ist der zweite Schenkel des Montagewinkels 7 mit dem Pfosten 2 verschraubt, wozu eine Schraube mit ihrem Kopf unverdrehbar in die hinterschnittene Nut 4 des Pfostens 2 eingeführt und verschraubt wird.

Die geneigte Traverse 3 ist mittels zweier in sich beweglicher Halterungen 8 einerseits an der Grundschiene 1 und andererseits am Pfosten 2 befestigt.

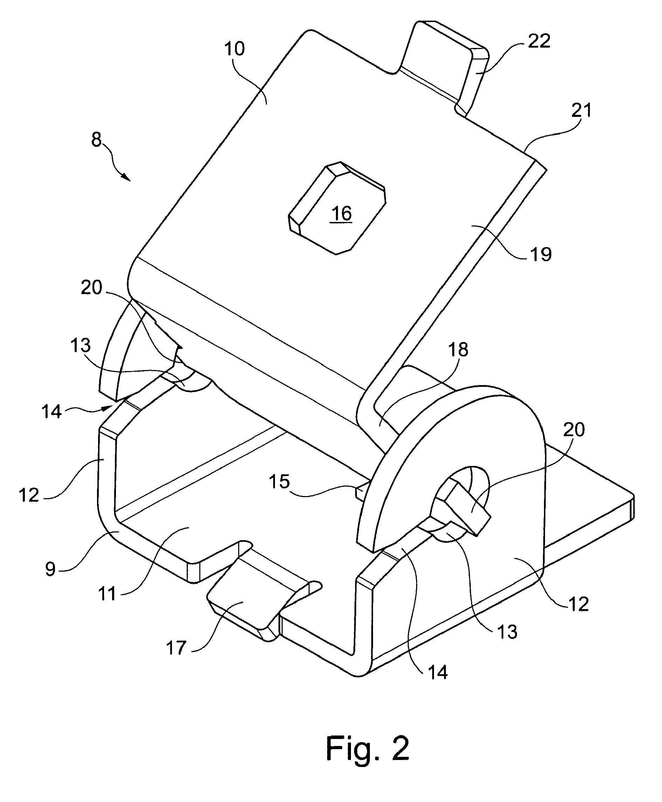

Figur 2 zeigt eine solche bewegliche Halterung 8 in einer Schrägansicht. Sie besteht aus einem ersten Winkelstück 9 als Unterteil und einem zweiten Winkelstück 10 als Oberteil. Das Unterteil 9 und das Oberteil 10 sind verschwenkbar miteinander verbunden.

Das erste Winkelstück 9 ist U-förmig ausgebildet. Es hat eine rechteckige Basis 11 und zwei deckungsgleich ausgebildete Seitenteile 12, welche rechtwinklig von der Basis 11 hoch stehen. Jedes Seitenteil 12 hat eine Bohrung 13 und einen Schlitz 14, welcher vom Rand des Seitenteils 12 ausgeht und in die Bohrung 13 mündet. Der Schlitz 14 hat ausgehend von der Bohrung 13 ein Gefälle zur Basis 11 hin. Ungefähr in der Mitte der Basis 11 befindet sich ein Loch 15 von quadratischem Querschnitt, wobei die Ecken des Quadrates abgeschrägt sind, so wie es in Figur 2 im zweiten Winkelstück 10 vorgesehen ist, welches ein gleich ausgebildetes Loch 16 aufweist. Weiterhin ist aus der Basis 11 in der Mitte zwischen den Seitenteilen 12 eine Zunge 17 ausgeschnitten und aus der Ebene der Basis 11 weggebogen, und zwar in Richtung zur Unterseite der Basis 11, das ist die den Seitenteilen 12 abgewandten Seite der Basis 11.

Das zweite Winkelstück 10 ist im Wesentlichen L-förmig ausgebildet, mit einem ersten Schenkel 18 und einem zweiten Schenkel 19, welche einen rechten Winkel zwischen sich einschließen. Die beiden Schenkel 18 und 19 sind so breit, dass sie genau oder mit wenig Spiel zwischen die beiden Seitenteile 12 des ersten Winkelstückes 9 passen. Der erste Schenkel 18 setzt sich in zwei seitliche Arme 20 fort, welche sich in entgegensetzte Richtungen erstrecken. Mit diesen Armen 20 ist das zweite Winkelstück 10 in den Bohrungen 13 der Seitenteile 12 schwenkbar gelagert. Durch die Schlitze 14 können die Arme 20 in die Bohrungen 13 eingeführt werden, in welchen sie nur wenig radiales Spiel haben.

Das Loch 16 mit quadratischem Querschnitt befindet sich in der Mitte des zweiten Schenkels 19. In der Mitte des von den Armen 20 entfernten Randes 21 des zweiten Schenkels 19 befindet sich eine Zunge 22, welche aus der Ebene des zweiten Schenkels 19 herausgebogen ist, und zwar in einer Richtung vom ersten Winkelstück 9 weg.

Bei den in Figur 1 dargestellten Ständern ist ein erstes Unterteil 9 am oberen Ende des Pfostens 2 befestigt, und zwar so, dass die Basis 11 der der Nut 4 abgewandten Seite des Pfostens 2 anliegt. Die Befestigung des Unterteils 9 am Pfosten 2 geschieht vorzugsweise durch Verschraubung mit einer Flachrundschraube und einer Gleitmutter.

Da der Pfosten 2 auf seiner der Nut 4 abgewandten Seite ebenfalls eine - allerdings tiefere - Nut 4a hat, welche beidseits hinterschnitten ist, kann das erste Winkelstück 9 mit dem Pfosten 2 auch verschraubt werden, wenn man in die Nut 4a einen Gegenhalter einführt, welcher mittig eine Gewindebohrung hat und sich an den Hinterschnitten 4b der Nut 4a abstützt. In diese Gewindebohrung kann eine Schraube gedreht werden, deren Kopf auf der Basis 11 des ersten Winkelstücks 9 liegt; dessen Loch 15 ist in diesem Fall zweckmäßig eine zylindrische Bohrung.

Ein zweites Unterteil 9 wird mit der Oberseite der Grundschiene 1 verschraubt, indem eine Schraube, welche zwischen ihrem Kopf und ihrem Gewindeabschnitt einen im Querschnitt quadratischen Schaft hat, mit dem Kopf in die hinterschnittene Nut 4 der Grundschiene 1 geschoben wird. Auf den quadratischen Schaft der Schraube wird das Unterteil 9 mit seinem quadratischen Loch 15 gesteckt, so dass das Unterteil 9 mittels des quadratischen Schaftes der Schraube relativ zur Grundschiene 1 so ausgerichtet wird, dass die Seitenteile 12 sich parallel zur Längsrichtung der Grundschiene 1 erstrecken, wie es in Figur 1 dargestellt ist. Mittels einer in Figur 1 nicht dargestellten Mutter wird das Unterteil 9, das ist das erste Winkelstück der Halterung 8, auf der Grundschiene 1 fixiert.

Zwei Oberteile 10, das sind die zweiten Winkelstücke der Halterungen 8, werden mit der Unterseite der geneigten Traverse 3 verbunden. Die Unterseite der geneigten Traverse 3 ist in Figur 1 nicht zu sehen; sie hat, ebenso wie der Pfosten 2, an ihrer Unterseite eine hinterschnittene Nut 4, in welche zwei Schrauben, welche zwischen ihrem Kopf und ihrem Gewinde einen im Querschnitt quadratischen Schaftabschnitt haben, mit ihrem Kopf hineingeschoben werden. Es handelt sich um Schrauben der Art, mit denen auch der Montagewinkel 7 an der Grundschiene 1 befestigt ist. Auf die Schrauben werden die Oberteile 10 der Halterungen 8 gesteckt und durch die quadratische Kontur des Loches 16, in welches der im Querschnitt quadratische Schaftabschnitt der Schrauben formschlüssig eingreift, parallel zur Längsrichtung der geneigten Traverse 3 ausgerichtet und anschließend mit dieser verschraubt. Dabei greifen die Oberteile 10 mit ihrer Zunge 22 in die hinterschnittene Nut 4 der geneigten Traverse 3 ein, wodurch ebenfalls eine Zentrierung und Ausrichtung erfolgen. In gleicher Weise greift die Zunge 17 des auf der Grundschiene 1 befestigten Unterteils 9 der Halterung 8 in die hinterschnittene Nut 4 der Grundschiene 1 ein und bewirkt dort eine Zentrierung und Ausrichtung.

Durch die Beweglichkeit der Oberteile 10 in den Unterteilen 9 kann die geneigte Traverse 3 biegespannungsfrei exakt in der gewünschten Neigung angeordnet werden, indem das an der Grundschiene 1 angebrachte Unterteil 9 durch hin und her Verschieben auf der Grundschiene 1 passend positioniert und schließlich durch Festschrauben fixiert wird.

Der in Figur 1 dargestellte Ständer kann abgewandelt und vereinfacht werden, indem in der Halterung 8, welche den Pfosten 2 mit der geneigten Traverse 3 verbindet, das Unterteil 9 und das Oberteil 10 unter dem gewünschten Neigungswinkel starr miteinander verbunden werden oder indem am oberen Ende des Pfostens 2 lediglich ein starres Winkelstück angeschraubt oder angeschweißt wird, welches in seinem vom Pfosten 2 fortweisenden Schenkel ein Loch mit quadratischer Kontur hat, wie das Loch 16 im Oberteil 10 gemäß Figur 2. Mit einem solchen starren Winkelstück kann die geneigte Traverse 3 mit vorgegebener Neigung am Pfosten 2 angebracht werden. Für die Befestigung der geneigten Traverse 3 frei von Biegespannung an der Grundschiene 1 genügt es, dass die Halterung 8 auf der Grundschiene 1 in deren Längsrichtung justiert werden kann, wobei sich die Neigung des Oberteils 10 selbsttätig der vorgegebenen Neigung der geneigten Traverse 3 anpasst.

Um rechteckige Solarmodule geneigt auf einem Flachdach anzuordnen, werden auf dem Flachdach zwei oder mehr als zwei Ständer der in Figur 1 dargestellten Art parallel nebeneinander angeordnet und durch zwei oder mehr als zwei waagerechte Quertraversen 23 miteinander verbunden.

Der in Figur 1 dargestellte Ständer eignet sich nicht nur zur Montage von Solarmodulen auf einem Flachdach, sondern auch zur Montage von Solarmodulen an einer Fassade. In diesem Fall wird die Grundschiene 1 nicht auf dem flachen Dach, sondern an der Fassade befestigt. Die Figur 1 ist dafür lediglich um 90° im Uhrzeigersinn zu drehen. Die Quertraversen 23 verlaufen in beiden Fällen waagerecht.

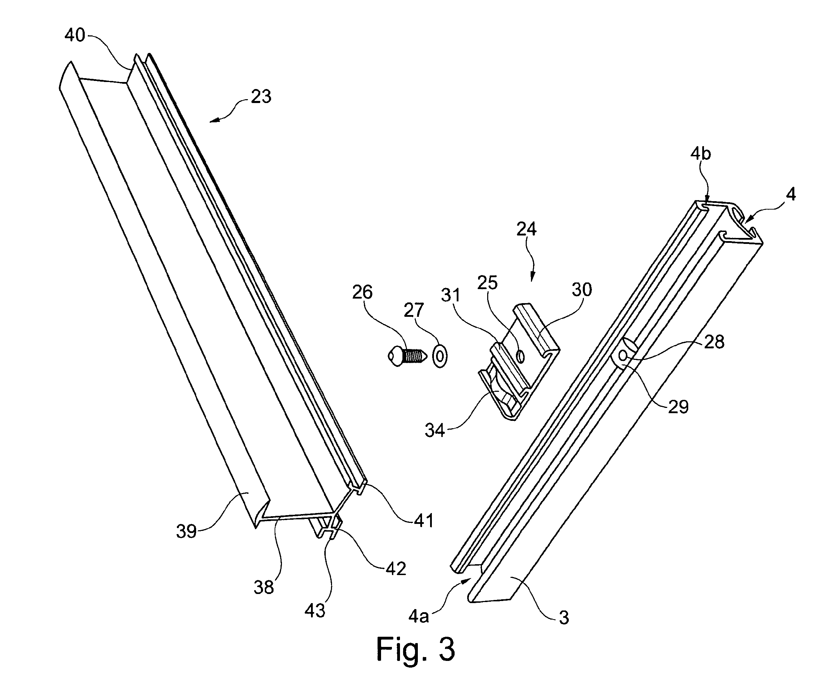

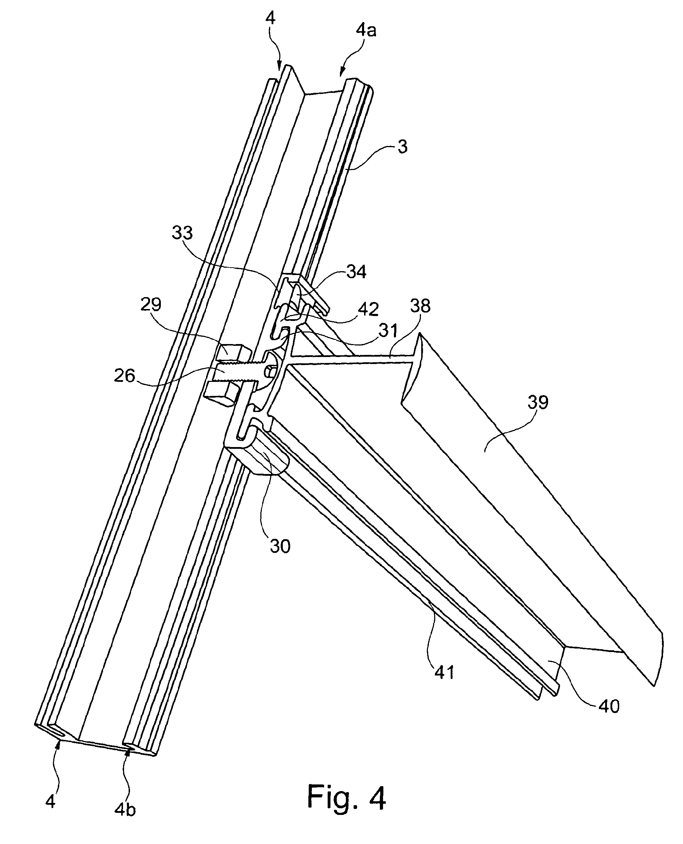

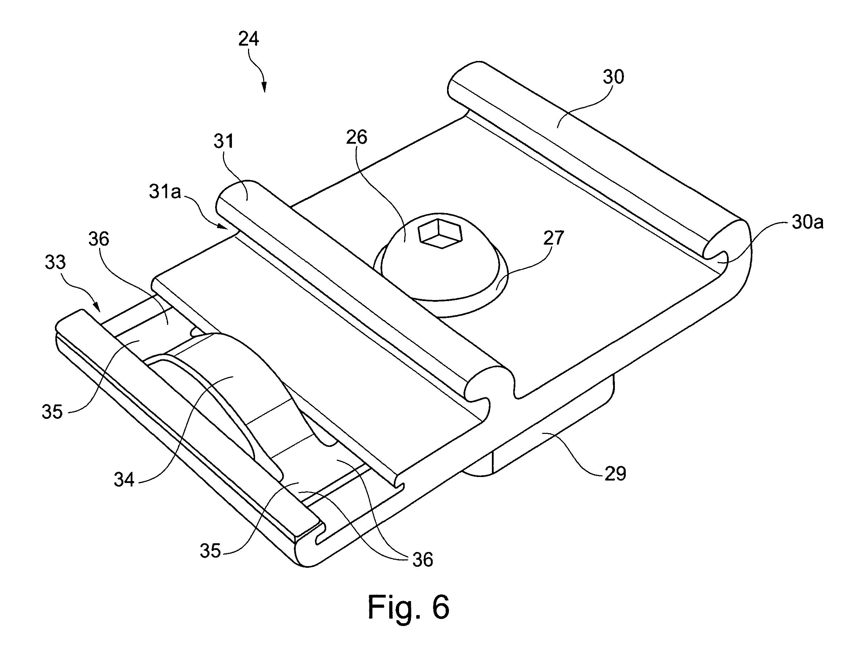

Die Figuren 3 und 4 zeigen, wie eine solche Quertraverse 23 mit einer geneigten Traverse 3 bequem verbunden werden kann. Zu diesem Zweck wird mit jeder geneigten Traverse 3 ein Halter 24 verschraubt, bei welchem es sich bevorzugt um einen Abschnitt eines metallischen Strangpressprofils handelt, welcher mittig eine zylindrische Bohrung 25 aufweist, durch welches eine Schraube 26 hindurch gesteckt werden kann, auf welche zuvor eine Unterlegscheibe 27 geschoben wurde. Die Schraube 26 wird in eine Gewindebohrung 28 eines Gegenhalters 29 gedreht, welcher in die hinterschnitten ausgebildete Nut 4a auf der Oberseite der geneigten Traverse 3 geschoben ist. Der Gegenhalter 29 ist so breit, dass er sich in der Traverse 3 nicht mitdrehen kann, wenn die Schraube 26 in ihn gedreht wird; er stützt sich an der Unterseite der Hinterschnitte 4b ab und verhindert ein Mitdrehen beim Schrauben durch formschlüssiges Eingreifen in die Nut 4a. Am Besten geht man so vor, dass man - wie in Figur 6 dargestellt - den Gegenhalter 29 zunächst locker mit dem Halter 24 verschraubt, den Gegenhalter 29 dann in die hinterschnitten ausgebildete Nut 4a der geneigten Traverse 3 schiebt und an der gewünschten Stelle durch Festdrehen der Schraube 26 fixiert.

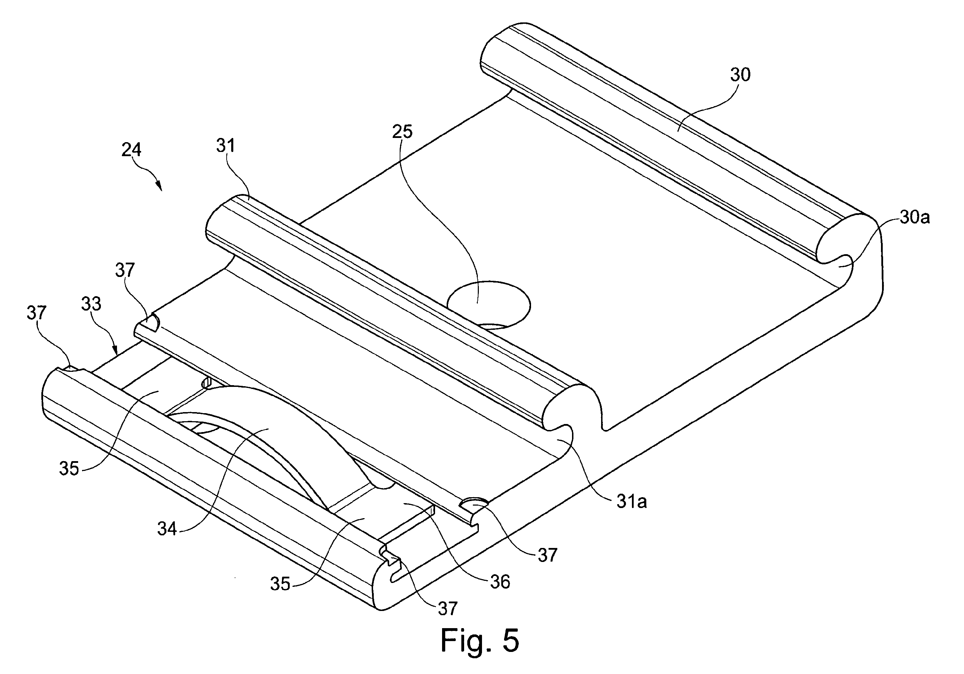

Wie man besonders gut anhand der Figur 6 sieht, hat der Halter 24 eine erste hinterschnittene Rippe 30 und parallel zu dieser eine zweite hinterschnittene Rippe 31. Die Hinterschnitte der Rippen 30 und 31 begrenzen Rillen 30a und 31a, welche zur gleichen Seite offen sind. Zwischen den beiden hinterschnittenen Rippen 30 und 31 steckt in der zylindrischen Bohrung 25 die Schraube 26. Neben der Rippe 31, aber nicht zwischen den Rippen 30 und 31, befindet sich in dem Halter 24 eine parallel zu der Rippe 31 verlaufende flache Nut 33, welche beidseitig hinterschnitten ist und in welcher eine Feder 34 gefangen ist. Die Feder 34 ist brückenbogenartig ausgebildet. Sie hat einen brückenbogenartigen Abschnitt, welcher sich in zwei ebene Endabschnitte 35 fortsetzt. Die ebenen Endabschnitte 35 haben beidseitig Fortsätze 36, welche in die Hinterschnitte der flachen Nut 33 eingreifen. Bei der Feder 34 handelt es sich um eine Stahlfeder. Wird sie in ihrem bogenförmigen Abschnitt niedergedrückt, dann entfernen sich ihre beiden ebenen Enden 35 voneinander; sie können in der hinterschnittenen Nut 33 gleiten. Damit die Feder 34 nicht aus der Nut 33 herausgleiten und verloren gehen kann, ist der Rand der flachen Nut 33 an deren beiden Enden etwas eingedrückt. Die eingedrückten Stellen sind mit der Bezugszahl 37 bezeichnet und in Figur 5 beispielhaft zu sehen.

Das Profil der Quertraverse 23 ist besonders gut in Figur 4 zu sehen. Die Quertraverse 23 hat einen Steg 38, welcher zwei quer dazu verlaufende Wände 39 und 40 verbindet. Der Steg 38 endet außermittig an den Wänden 39 und 40. Die Wand 40 setzt sich in zwei Leisten 41 und 42 fort, welche in einer gemeinsamen Ebene liegen, welche rechtwinklig zum Steg 38 und annährend parallel zur Wand 39 verläuft. Die Leiste 41 ist dazu vorgesehen, in die Rille 30a einzugreifen. Die Leiste 42 ist dazu vorgesehen, in die Rille 31a einzugreifen und mit ihrem von der Rille 31a abgewandten Rand 43 am seitlichen Rand des bogenförmigen Abschnitts der Feder 34 anzuschlagen.

Um die Quertraverse 23 mit ihren Leisten 41 und 42 in die Rillen 30a bzw. 31a einführen zu können, positioniert man die Quertraverse 23 mit ihren Leisten 41 und 42 vor den Rillen 30a und 31a. Die Leiste 42 liegt dann auf der Feder 34, welche zunächst verhindert, dass die Leisten 41 und 42 in die Rillen 30a und 31a geschoben werden. Erst wenn die Feder 34 mit der Quertraverse 23 niedergedrückt wird, kann man die Quertraverse 23 mit ihren Leisten 41 und 42 bis zum Anschlag in die Rillen 30a und 31a schieben. Dabei gleitet die Leiste 42 seitlich von der Feder 34 ab, so dass diese sich wieder aufwölbt und mit ihrem gewölbtem Abschnitt unmittelbar neben dem Rand 43 der Leiste 42 liegt und verhindert, dass die Quertraverse 23 mit ihren Leisten 41 und 42 wieder aus den Rillen 30a und 31 a herausgleitet.

Die mittels der Feder 34 im Halter 24 verriegelte Quertraverse 23 und ihr Eingriff in den Halter 24 sind in der Schnittdarstellung der Figur 4 gut zu erkennen. Sollte es erforderlich sein, irgendwann einmal die Quertraverse 23 wieder zu entfernen, muss man lediglich, z. B. mit einem Schraubenzieher, den Bogen der Feder 34 nach unten drücken, um die Quertraverse 23 zu entriegeln.

Ein plattenförmiges Solarmodul, insbesondere ein Fotovoltaikmodul, wird wie folgt zwischen zwei waagerechte Quertraversen 23 eingesetzt und von diesen gehalten, welche in der beschriebenen Weise mit Abstand voneinander an geneigten Traversen 3 befestigt sind: Mit seinem oberen Rand wird das Solarmodul von unten her gegen den Steg 38 der oberen Quertraverse 3 gehoben. Der untere Rand des Solarmoduls kann dann über den oberen Rand der weiter unten liegenden, benachbarten Quertraverse 23 gehoben und auf deren Steg 38 abgesenkt werden. Da die Wand 39, an welcher der Steg 38 endet, nach unten hin weiter über den Steg 38 vorsteht als nach oben, bleibt das Solarmodul unter seinem eigenen Gewicht zwischen den Stegen 39 der beiden benachbarten Quertraversen 23 gefangen. Genauso leicht, nämlich durch Anheben und Herausheben des Solarmoduls mit seinem unteren Rand über den oberen Rand der unteren Quertraverse 23 hinweg, kann das Solarmodul auch wieder entnommen werden.

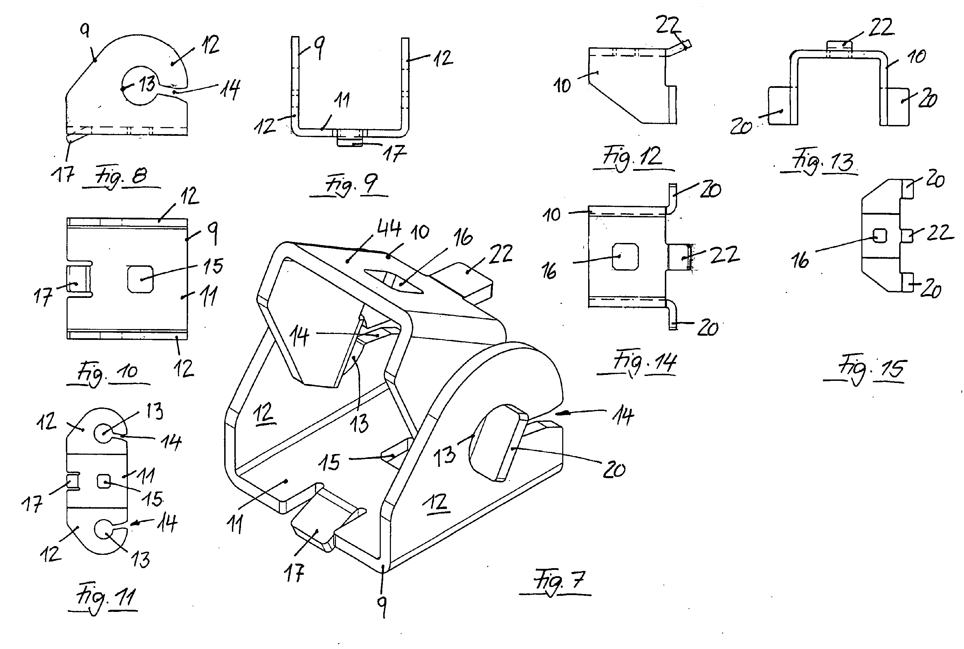

Die in den Figuren 7 bis 15 dargestellte Halterung 8 unterscheidet sich von der in Figur 2 dargestellten Halterung 8 nur darin, dass anstelle eines im Wesentlichen L-förmigen Oberteils 10 ein im Wesentlichen U-förmiges Oberteil 10 vorgesehen ist, dessen Mittelteil 44 mit einem quadratischen Loch 16 für die Verschraubung mit einer geneigten Traverse 3 vorgesehen ist. Die in den Figuren 7 bis 15 dargestellte Halterung hat gegenüber dem Ausführungsbeispiel in Figur 2 den Vorteil einer größeren mechanischen Stabilität und Steifigkeit. Beide Ausführungsformen der Halterung 8 lassen sich durch Stanzen und Biegen aus Stahlblech herstellen. Wie das Stanzteil vor dem Biegen aussieht, ist für das Unterteil 9 in Figur 11 und für das Oberteil 10 in Figur 15 dargestellt.

In entsprechender Weise wie die in den Figuren 7 bis 15 dargestellte Halterung 8 lässt sich auch die in Figur 2 dargestellte Halterung 8 durch Stanzen und Biegen aus einem Stahlblech herstellen.

### Bezugszahlen

- 1: Grundschiene, (waagerechter) Träger
- 2: Profilstab, Pfosten
- 3: geneigte Traverse
- 4: hinterschnittene Nut
- 4a: hinterschnittene Nut
- 4b: Hinterschnitte
- 5: Schraube
- 6: Mutter
- 7: Montagewinkel
- 8: Halterung
- 9: erstes Winkelstück (Unterteil)
- 10: zweites Winkelstück (Oberteil)
- 11: Basis
- 12: Seitenteile
- 13: Bohrung
- 14: Schlitz
- 15: Loch in 9
- 16: Loch in 10
- 17: Zunge
- 18: erster Schenkel
- 19: zweite Schenkel
- 20: Arme
- 21: Rand
- 22: Zunge
- 23: Quertraverse
- 24: Halter
- 25: zyl. Bohrung in 24
- 26: Schraube
- 27: Unterlegscheibe
- 28: Gewindebohrung in 29
- 29: Gegenhalter
- 30: hinterschnittene Rippe
- 30a: Rille
- 31: hinterschnittene Rippe
- 31 a: Rille
- 32:
- 33: hinterschnittene Nut
- 34: Feder
- 35: ebene Endabschnitte vom 34
- 36: seitliche Fortsätze von 35
- 37: eingedrückte Stellen an 38
- 38: Steg von 23
- 39: Wand von 23
- 40: Wand von 23
- 41: Leiste an 23
- 42: Leiste an 23
- 43: Rand der Leiste 42
- 44: Mittelteil

## Patentansprüche

1. Ständer für rechteckige Solarmodule, um diese auf einem Flachdach geneigt zu montieren, mit einem waagerechten Träger (1), mit einem von dem waagerechten Träger (1) aufragenden Pfosten (2) und mit einer den Pfosten (2) und den Träger (1) verbindenden, geneigten Traverse (3), **dadurch gekennzeichnet, dass** der Ständer eine Halterung (8) mit zwei zusammenhängenden, um eine waagerechte Achse gegeneinander verschwenkbaren Winkelstücken (9, 10) aufweist, welche die geneigte Traverse (3) mit dem waagerechten Träger (1) und/oder mit dem Pfosten (2) verbinden,
von denen ein erstes Winkelstück (9) U-förmig ausgebildet ist, und zwar mit einer Basis (11) und zwei im rechten Winkel von der Basis (11) abstehenden Seitenteilen (12),
wobei die Basis (11) Mittel (15) zum Befestigen des ersten Winkelstücks (9) an dem waagerechten Träger (1) bzw. an dem Pfosten (2) hat und die Seitenteile (12) je eine Bohrung (13) sowie einen Schlitz (14) haben, welcher vom Rand des Seitenteils (12) ausgeht und in die Bohrung (13) mündet, wobei die beiden Bohrungen (13) miteinander fluchten und auch die beiden Schlitze (14) miteinander fluchten,
und von denen das zweite Winkelstück (10) zwei sich in entgegengesetzte Richtungen erstreckende, miteinander fluchtende Arme (20) hat, welche in den Bohrungen (13) der Seitenteile (12) stecken, wobei das zweite Winkelstück (9) Mittel (16) zum Verbinden des zweiten Winkelstücks (10) mit der geneigten Traverse (2) des Ständers aufweist.

2. Ständer für rechteckige Solarmodule, um diese an einer Fassade geneigt zu montieren, mit einem senkrechten Träger (1), mit einem von dem senkrechten Träger (1) abstehenden waagerechten Pfosten (2) und mit einer den Pfosten (2) und den Träger (1) verbindenden, geneigten Traverse (3), **dadurch gekennzeichnet, dass** der Ständer eine Halterung (8) mit zwei zusammenhängenden, um eine waagerechte Achse gegeneinander verschwenkbaren Winkelstücken (9, 10) aufweist, welche die geneigte Traverse (3) mit dem senkrechten Träger (1) und/oder mit dem Pfosten (2) verbinden,
von denen ein erstes Winkelstück (9) U-förmig ausgebildet ist, und zwar mit einer Basis (11) und zwei im rechten Winkel von der Basis (11) abstehenden Seitenteilen (12),
wobei die Basis (11) Mittel (15) zum Befestigen des ersten Winkelstücks (9) an dem senkrechten Träger (1) bzw. an dem Pfosten (2) hat und die Seitenteile (12) je eine Bohrung (13) sowie einen Schlitz (14) haben, welcher vom Rand des Seitenteils (12) ausgeht und in die Bohrung (13) mündet, wobei die beiden Bohrungen (13) miteinander fluchten und auch die beiden Schlitze (14) miteinander fluchten,
und von denen das zweite Winkelstück (10) zwei sich in entgegengesetzte Richtungen erstreckende, miteinander fluchtende Arme (20) hat, welche in den Bohrungen (13) der Seitenteile (12) stecken, wobei das zweite Winkelstück (9) Mittel (16) zum Verbinden des zweiten Winkelstücks (10) mit der geneigten Traverse (2) des Ständers aufweist.

3. Ständer nach Anspruch 1 oder 2, **dadurch gekennzeichnet, dass** die an der Basis (11) des U-förmigen ersten Winkelstücks (9) vorgesehenen Mittel (15) zum Befestigen an dem Träger (1) ein Loch, insbesondere ein Loch (15) mit nicht rundem Öffnungsquerschnitt, aufweisen.

4. Ständer nach einem der vorstehenden Ansprüche, **dadurch gekennzeichnet, dass** die Seitenteile (12) des ersten Winkelstücks (9) zueinander parallel sind.

5. Ständer nach einem der vorstehenden Ansprüche, **dadurch gekennzeichnet, dass** an der Basis (11) des ersten Winkelstücks (9) eine Zunge (17) vorgesehen ist, welche auf der den Seitenteilen (12) abgewandten Seite der Basis (11) von dieser absteht, vorzugsweise unter einem von 90° verschiedenen Winkel.

6. Ständer nach einem der vorstehenden Ansprüche, **dadurch gekennzeichnet, dass** die Schlitze (14) in den Seitenteilen (12) mit Gefälle von der jeweiligen Bohrung (13) zum Rand des Seitenteils (12) führen.

7. Ständer nach einem der vorstehenden Ansprüche, **dadurch gekennzeichnet, dass** die Arme (20) des zweiten Winkelstücks (10) durch die Schlitze (14) in den Seitenteilen (12) des ersten Winkelstücks (9) in die Bohrungen (13) in den Seitenteilen (12) des ersten Winkelstücks (9) einführbar und darin mit etwas Spiel drehbar sind.

8. Ständer nach einem der vorstehenden Ansprüche, **dadurch gekennzeichnet, dass** das zweite Winkelstück (10) einen ersten Schenkel (18) und einen zweiten Schenkel (19) aufweist, welche miteinander einen Winkel einschließen, welcher vorzugsweise ein rechter Winkel ist, und dass die Arme (20) vom ersten Schenkel (18) ausgehen und die Mittel (16) zum Verbinden mit der geneigt verlaufenden Traverse (3) am zweiten Schenkel (19) vorgesehen sind.

9. Ständer nach Anspruch 8, **dadurch gekennzeichnet, dass** der erste Schenkel (18) und der zweite Schenkel (19) des zweiten Winkelstücks (10) i. w. ebenflächige Gebilde sind.

10. Ständer nach einem der vorstehenden Ansprüche, **dadurch gekennzeichnet, dass** am zweiten Schenkel (19) des zweiten Winkelstücks (10) eine Zunge (17) vorgesehen ist, welche auf der vom ersten Winkelstück (9) abgewandten Seite des zweiten Schenkels (19) des zweiten Winkelstücks (10) von diesem absteht, vorzugsweise unter einem von 90° verschiedenen Winkel.

11. Ständer nach einem der vorstehenden Ansprüche in Verbindung mit Anspruch 8, **dadurch gekennzeichnet, dass** die Ränder des ersten Schenkels (18) des zweiten Winkelstücks (10) in der Nachbarschaft der Arme (20), die von ihnen ausgehen, zueinander parallel verlaufen und einen Abstand voneinander haben, welcher mit dem Abstand der Innenseiten der Seitenteile (12) des ersten Winkelstücks (9) übereinstimmt.

12. Ständer nach einem der Ansprüche 1 bis 7, **dadurch gekennzeichnet, dass** das zweite Winkelstück (10) U-förmig ausgebildet ist, mit einem i. w. ebenen Mittelteil (44), an welchem die Mittel (16) zum Verbinden mit der geneigten Traverse (3) vorgesehen sind,
und mit zwei Seitenteilen (12), von welchen die Arme (20) ausgehen.

13. Ständer nach Anspruch 12, **dadurch gekennzeichnet, dass** die Seitenteile (12) des zweiten Winkelstücks (10) ohne Spiel oder mit wenig Spiel zwischen die Seitenteile (12) des ersten Winkelstücks (9) passen.

14. Ständer nach Anspruch 12 oder 13, **dadurch gekennzeichnet, dass** am Mittelteil (44) des zweiten Winkelstücks (10) eine Zunge (22) vorgesehen ist, welche auf der ihren Seitenteilen (12) abgewandten Seite des Mittelteils (44) von diesem absteht, vorzugsweise unter einem von 90° verschiedenen Winkel.

15. Ständer nach einem der vorstehenden Ansprüche, **dadurch gekennzeichnet, dass** die Mittel (16) des zweiten Winkelstücks (10) zum Befestigen an der geneigten Traverse (3) ein Loch (16), insbesondere ein Loch (16) mit nicht rundem Öffnungsquerschnitt, aufweisen.
